# EUROPEAN PATENT APPLICATION

(11) **EP 2 963 542 A1**
(43) Date of publication of application: **06.01.2016**
(21) Application number: 14175167.7
(22) Date of filing: 01.07.2014
(51) Int. Cl.: G06F 9/44, G06Q 10/06

(54) **Method and architecture for comparing and merging engineering objects stored using dynamic versioning strategy**

(71) Applicant: Siemens Aktiengesellschaft, 80333 München (DE)
(72) Inventor: Uppunda, Prashanth, 560078 Bangalore (IN); Govindaru, Anil, 560047 Bangalore (IN)

(57) **Abstract**

A method and comparison architecture for comparing at least one project objects with at least one versioned object in a software management system is disclosed. The method comprises a step for fetching the at least one versioned object from a plurality of versioned objects and a step for loading at least one policy in at least one memory module. The at least one policy is corresponding to a type of the at least one project object. At next step of the method disclosed in the present invention at least one engineering object is created from the at least one versioned object and the at least one policy. At the final step of the method the at least one project object and the at least one engineering object are displayed side by side or simultaneously at one or more comparison user interfaces.

## Description

The present invention relates to a method and architecture for comparing and merging of engineering objects and more particularly, to a method and architecture for comparing and merging of engineering objects stored using dynamic versioning strategy.

Automation systems, such as those used for manufacturing various articles of manufacture and/or controlling and monitoring processes, are inherently based on various engineering applications that are developed in software management systems and also known as engineering systems.

Such engineering applications typically works based on a 'project' concept. A project includes various engineering or logical objects, such as but not limited to, logical objects logically representing programmable logic controllers, human machine interface devices, function block resident on individual programmable logic controllers, tag tables and screen control objects resident on individual human machine interfaces, and so forth.

In such engineering applications, various changes may be required owing to changes in the design of the assemblies, the components used therein, and so on. It is an important challenge to be able to assign appropriate versions to individual logical objects within each engineering applications, i.e. the projects to track various versions thereof, and to validate or release only those versions of individual logical objects that have been duly tested and approved for release.

Versioning is a commonly used technique to address the above-stated need. In accordance with this technique, individual components or logical objects in an engineering application project are converted into individual physical files, and then "versioned" or archived in a repository. These physical files can then be used to retrieve back the corresponding logical objects in the software management system. In a software management system that supports multi-user environment, the repository acts to facilitate sharing and cooperation between multiple users.

An advantageous technique of versioning the individual components or logical objects of an engineering application project, known in the state of the art, is dynamic versioning technique. The dynamic versioning of the components facilitates switching between different archiving formats with relative ease.

In general, under dynamic versioning of the logical objects, a policy master tool and a policy mapping tool are configured. The policy master tool includes a plurality of versioning policies, wherein each versioning policy is associated with an inter-conversion module selected from a set of predefined inter-conversion modules. The policy mapping tool associates each object type to a unique versioning policy selected from the plurality of versioning policies.

When the engineering objects are versioned in various formats using the dynamic versioning strategy, as mentioned above, it becomes very complex to visually compare and analyze the changes between an engineering project object and a versioned object stored in a repository, also known as version management repository. Comparing the engineering objects of the project with the corresponding objects stored in the repository is helpful in identifying the differences between the two objects. Sometimes it is also required to merge the changes back in the engineering project object in accordance to the corresponding object stored in the repository. For example, assuming there is a new version for a first engineering object is available in the repository, as a first user has made some changes and checked-in to the repository. But a second user has already made changes to the corresponding engineering object in his local engineering project. Now the second user might wish to compare and visually see the differences between the engineering object saved by the first user in the repository and the corresponding engineering object modified by him. In addition to this, there is a possibility that the second user might like to merge the changes in accordance with the engineering object available in the repository before proceeding further.

From the above description it is clearly evident that comparison and merging of different versions of engineering objects of a project is an integral part of software management system. In addition to this, the comparison and merging of the versions of the engineering objects, those are versioned using dynamic versioning strategy, is a complex and challenging task.

From the foregoing description it is evident that there is a strong need of a method and an architecture for comparing and merging a project object with the versions of the engineering objects stored using dynamic versioning strategy in a version management repository.

It is therefore an object of the present invention to provide a method and an architecture for comparing and merging the versions of the engineering objects stored using dynamic versioning strategy in a version management repository.

The object is achieved by providing a method for comparing at least one project objects with at least one versioned objects in a software management system according to claim 1, and a comparison architecture for comparing at least one project objects with at least one versioned objects in a software management system according to claim 8. Further embodiments of the present invention are addressed in the dependent claims.

In a first aspect of the present invention, a method for comparing at least one project object with at least one versioned object in a software management system is disclosed. The method comprises a step for fetching the at least one versioned object from a plurality of versioned objects and a step for loading at least one policy in at least one memory module. The at least one policy is corresponding to a type of the at least one project object. At next step of the method disclosed in the present invention at least one engineering object is created from the at least one versioned object and the at least one policy. At the final step of the method the at least one project object and the at least one engineering object are displayed side by side or simultaneously at one or more comparison user interfaces.

In accordance with the first aspect of the present invention, the method further comprises a step of selecting the at least one project object from a plurality of project objects before fetching the at least one versioned object. The at least one versioned object is stored in at least one repository and is corresponding to the at least one project object.

Further, in accordance with the first aspect of the present invention, the method further comprises a step of importing the at least one versioned object through the at least one policy in at least one temporary project module before creating the at least one engineering object. Also according to the first aspect of the invention, the at least one engineering object is a part of at least one temporary project created in the at least one temporary project module.

Furthermore in accordance with the first aspect of the present invention, the method further comprises a step of merging one or more components of the at least one project object and one or more versioned components of the at least one engineering object after the step of displaying the at least one project object and the at least one engineering object at the one or more comparison user interfaces.

In addition to it, according to the first aspect of the present invention, the merging of the one or more components further comprises dragging-and-dropping the one or more versioned components of the at least one engineering object in the at least one project object. Also the merging the one or more components further comprises dragging-and-dropping the one or more components of the at least one project object in the at least one engineering object.

In a second aspect of the present invention, a comparison architecture for comparing at least one project object with at least one versioned object in a software management system is disclosed. In accordance to the comparison architecture disclosed as the second aspect of the present invention comprises at least one fetching module for fetching the at least one versioned object from a plurality of versioned objects, at least one memory module for loading at least one policy, at least one temporary project module for creating at least one engineering object from the at least one versioned object and the at least one policy and one or more comparison user interfaces for displaying the at least one project object and the at least one engineering object.

In accordance to the second aspect of the present invention, the comparison architecture also comprises at least one selection module for selecting the at least one project object from a plurality of project objects before fetching the at least one versioned object.

Also in accordance with the second aspect of the present invention the comparison architecture is a part of a software management system.

Further, in accordance with the second aspect of the present invention, the at least one fetching module, of the comparison architecture, fetches the at least one versioned object from a plurality of versioned objects stored in at least one object repository of the software management system.

Furthermore, in accordance to the second aspect of the present invention, the at least one memory module, of the comparison architecture, loads the at least one policy from at least one policy master tool of the software management system.

Accordingly, the present invention provides a method and comparison architecture for comparing at least one project objects with at least one versioned object in a software management system.

The present invention is further described hereinafter with reference to illustrated embodiments shown in the accompanying drawings, in which:
- FIG 1: illustrates a schematic view of a software management system with dynamic versioning capability,
- FIG 2: illustrates an exemplary policy master tool in accordance with the software management system of FIG 1,
- FIG 3: illustrates an exemplary user interface rendered using policy mapping module in accordance with the software management system of FIG 1,
- FIG 4: illustrates an exemplary policy mapping tool in accordance with the software management system of FIG 1,
- FIG 5: illustrates a schematic view of comparison architecture of a software management system in accordance with an embodiment of the present invention,
- FIG 6: illustrates an exemplary user interface rendered using comparison user interface in accordance with an embodiment of the present invention, and
- FIG 7: illustrates a flow chart for a method for comparing and merging engineering objects in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

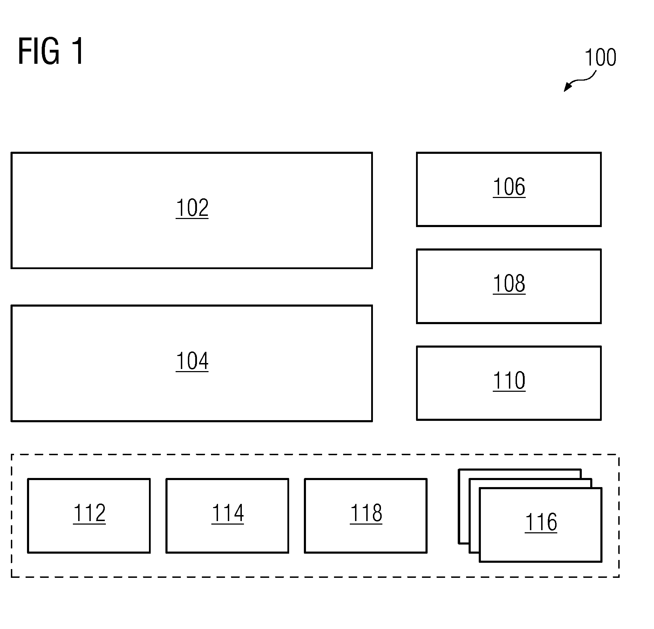

Referring to FIG 1, a schematic view of a software management system 100 with dynamic versioning capability is illustrated.

The software management system 100 includes a development environment 102 and an object repository 104. In addition, the software management system 100 includes a policy master module 106, a policy mapping module 108, and a managing module 110. The policy master module 106 and the policy mapping module 108 are communicatively coupled to a policy master tool 112 and a policy mapping tool 114 respectively. The software management system 100 further includes an inter-conversion module 116 and an archive mapping tool 118.

The software management system 100 is configured for versioning of electronic data resident therein. As stated earlier, architecturally, the software management system 100 includes two main components, namely, the development environment 102 and the object repository 104.

The development environment 102 provides access to one or more logical objects arranged in a hierarchical model. The hierarchical model is formed based on logical and functional relationships between individual logical objects. Examples of such logical objects include but are not limited to, logical objects representing programmable logic controllers, human machine interface devices, function block resident on individual programmable logic controllers, tag tables and screen control objects resident on individual human machine interfaces, and so forth. Each logical object is characterized by a corresponding object type, i.e. to say, that the object types could be tag tables, screen control objects and so on.

The object repository 104 is configured for storing one or more archive files corresponding to the logical objects.

As explained in the preceding description, the software management system 100 of FIG 1 is intended to provide the dynamic versioning technique to manage transformation between the logical objects accessible through the development environment 102 and the archive files stored in the object repository 104. In dynamic versioning technique of the software management system 100, each object type is mapped to an archiving technique with a versioning policy providing an intermediate link between the two, as will now be explained in detail.

The software management system 100 is provided with the policy master module 106. The policy master module 106 provides an interface for configuring the policy master tool 112. The policy master tool 112 includes a plurality of versioning policies. Each versioning policy is associated with an individual inter-conversion module selected from the set of predefined inter-conversion modules 116. Each inter-conversion module 116 implements a predefined archiving/dearchiving technique.

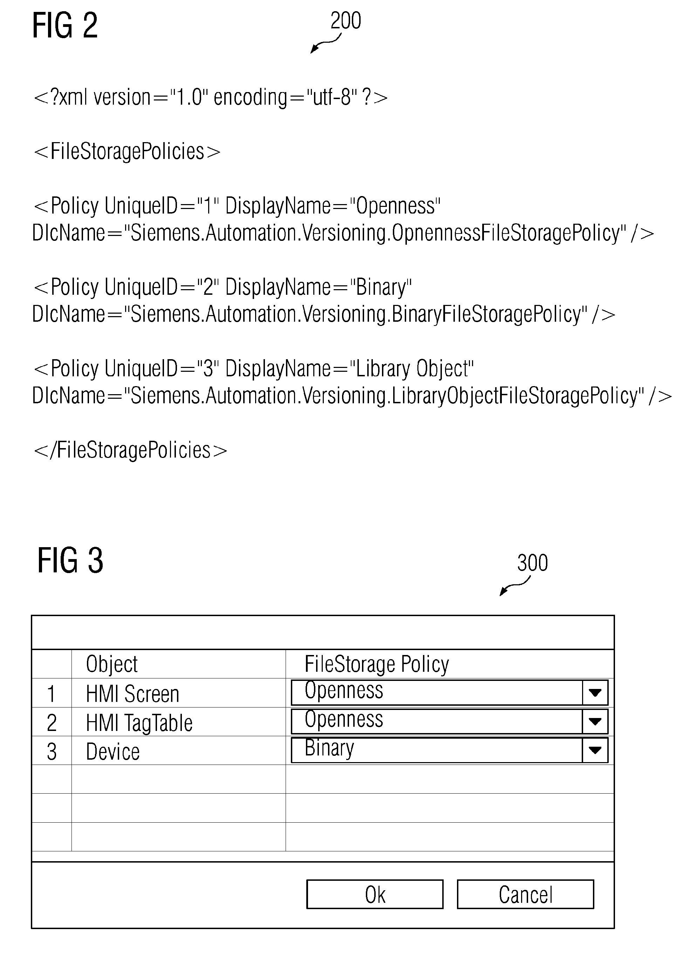

In an exemplary illustration, the policy master tool 112 shown in FIG 1 is embodied in an XML file such as one shown in FIG 2. As can be seen in FIG 2, an exemplary policy master tool is illustrated in accordance with the software management system 100 of FIG 1. The policy master tool 112 in this case is embodied in the XML code 200. In the example shown in the adjoining figure, three distinct versioning policies with unique identities 1, 2, and 3 and display names as "Openness", "Binary", and "Library Object" respectively are configured. The software management system 100, and in particular, the policy master module 106 may be configured to provide a suitable user interface wherein a user of the software management system 100 may configure the policy master tool 112 as required. As can be further seen in the adjoining, each versioning policy is further associated with one of the inter-conversion module 116. For example, versioning policy *"Openness"* is associated with inter-conversion module 116 identified as "*Siemens*.*Automation*.*Versioning*.*OpennessFileStoragePolicy*".

Referring back to FIG 1, the policy mapping module 108 provides for configuring the policy mapping tool 114. The policy mapping tool 114 associates each object type with a unique versioning policy selected from the plurality of versioning policies available in the policy master tool 112.

Referring now to FIG 3, an exemplary user interface 300 rendered using policy mapping module 108 is illustrated in accordance with the software management system 100 of FIG 1.

As can be seen, the exemplary user interface 300 provides a list of various distinct object types corresponding to the logical objects resident in the software management system 100. The exemplary user interface 300 provides an option to configure a versioning policy for each object type. In the example shown in FIG 3, the user is provided with a drop down list of available versioning policies and the user may select a desired versioning policy from the drop down list. As a result of user inputs, the policy mapping tool 114 is configured.

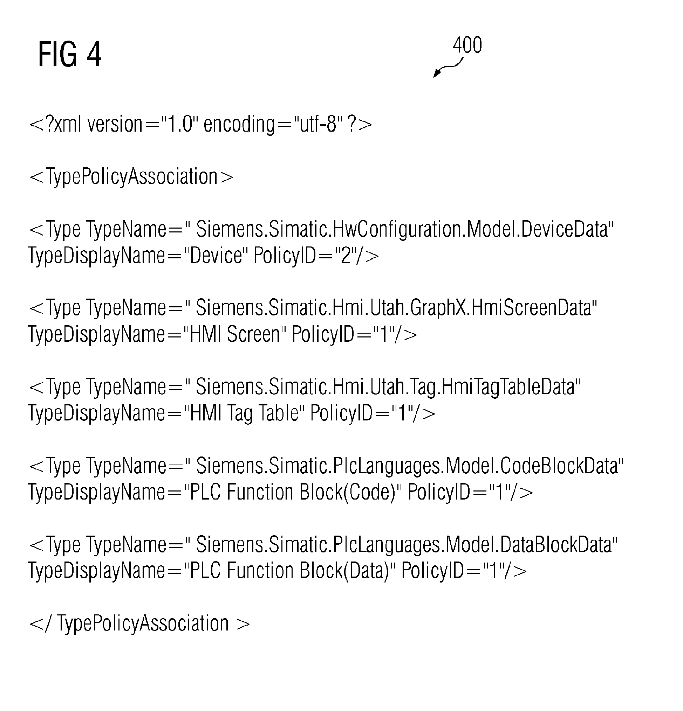

Referring now to FIG 4, an exemplary policy mapping tool 114 is shown in accordance with the software management tool shown in FIG 1.

The exemplary policy mapping tool 114 is embodied in an XML file such as one shown in FIG 4. The policy mapping tool 114 in this case is embodied in the XML code 400. In the example shown in the adjoining figure, five distinct object types are mapped to unique versioning policies. For example, the object type "HMI Screen" is associated with the versioning policy with PolicyID=1 *("Openness"* in the current example).

It should be noted that the policy master tool 112 and the policy mapping tool 114 may be implemented in any desired manner and the exemplary XML codes for the individual tools 112, 114 should not be construed as limiting in any manner whatsoever. For example, the tools 112, 114 may be implemented as a look-up table in a database, and so on.

Referring back to FIG 1, the managing module 110 is configured for managing transformation between the logical objects in the development environment 102 and the corresponding archive files in the object repository 104 based on the versioning policy associated therewith.

Thus, when an action to transfer a logical object from the development environment 102 to the object repository 104 is initiated, the managing module 110 dynamically identifies the corresponding versioning policy based on the object type associated therewith. Based on the versioning policy, the managing module 110 activates the corresponding inter-conversion module 116. The archiving/versioning of the logical object is proceeded with using the relevant inter-conversion module 116. When an action to transfer an archive file from the object repository 104 to the development environment 102 is initiated, a similar sequence of steps is performed to complete the desired action.

As will now be understood, each inter-conversion module 116 is configured for archiving one or more logical objects in an object repository based on a user input therefor. When an inter-conversion module 116 is invoked by the managing module 110 to archive/version a logical object in the development environment 102, the inter-conversion module 116 creates an archive file corresponding to the logical object in the object repository 104 using the corresponding archiving technique. The archive file, thus created, is associated with a unique version identifier. It should be noted that in case an archive file for the logical object already exists in the object repository 104, a new archive file is created with an updated version identifier. However, in case, no previous archive file exists, a new archive file is created with an initial version. The techniques related to assigning version identifiers to archive files are generally understood in the art and hence, not being explained in detail herein for sake of brevity.

When the inter-conversion module 116 creates an archive file, the managing module 110 configures an archive mapping tool 118 to maintain information related to association between the logical objects and corresponding one or more archive files.

The managing module 110 is further configured for retrieving one or more archive files from the object repository 104 based on a user input therefor. The archive files are retrieved in accordance with a corresponding versioning policy associated therewith. When an archive file is retrieved, a logical object corresponding to the archive file is created in the development environment 102 using a dearchiving technique in accordance with the inter-conversion module.

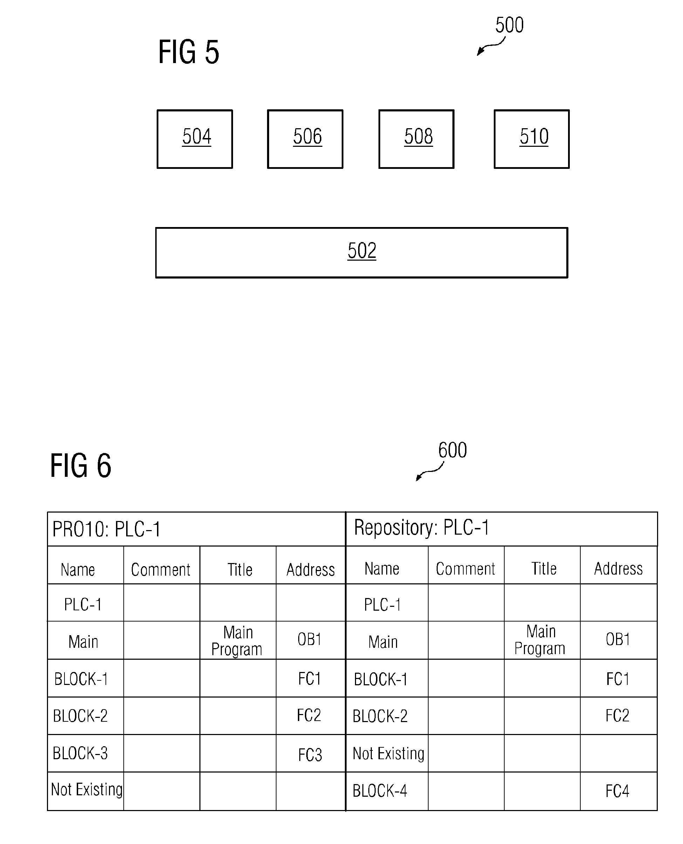

FIG 5 illustrates a schematic view of comparison architecture 500 in accordance with an embodiment of the present invention.

In accordance with the comparison architecture 500 shown in FIG 5, a comparison user interface 502 is provided. The comparison user interface 502 is communicatively coupled with a selection module 504, a fetching module 506, a memory module 508 and a temporary project module 510. In addition to this, the selection module 504, the fetching module 506, the memory module 508 and the temporary project module 510 are also mutually coupled and are capable to communicate with each other.

For comparing an engineering project object with a corresponding versioned object available in the object repository 104 of FIG 1, a user selects the project object from the comparison user interface 502 which in turns communicated to the selection module 504. In addition to this, the user also chooses "Compare" menu option, not show in FIG 5, available on the comparison user interface 502. The selection module 504 communicates the project object selected by the user to the fetching module 506 and the memory module 508.

The fetching module 506 fetches the corresponding versioned object available in the object repository 104 of FIG 1. In addition to this, a policy corresponding to "type" of the project object is read from the XML code, as illustrated in FIG 4 and loaded in the memory module 508. The corresponding versioned object is imported in the temporary project module 510 from the fetching module 506 through the policy loaded in the memory module 508. By importing the corresponding versioned object in the temporary project module 510, a corresponding engineering object is created in a temporary project of the temporary project module 510. In an embodiment of the present invention, by importing the corresponding versioned object in the temporary project module 510, a corresponding engineering object is created in a temporary library of the temporary project module 510. In another embodiment of the present invention, the policy corresponding to "type" of the project object loaded in the memory module 508 is unloaded after importing the corresponding versioned object in the temporary project module 510.

The corresponding engineering object of the temporary project is compared with the project object through object data structures by using the comparison user interface 502. In addition to this, the comparison user interface 502 also capable of merging the object data structures by facilitating the user to drag-and-drop the data structures of the corresponding engineering object to the project object. In an embodiment of the present invention, any technique known in the state of the art can be used for merging the data structures of the corresponding engineering object to the project object.

Referring now to FIG 6, an exemplary user interface 600 rendered using the comparison user interface 502 is illustrated in accordance with an embodiment of the present invention.

The exemplary user interface 600 displays components of an exemplary project object PLC_1 of an exemplary project PRO10. The exemplary user interface 600 displays components of an exemplary corresponding engineering object PLC_1 created by the temporary project module 510 of FIG 5 from an exemplary versioned object stored in the repository 104 of FIG 1. It is clearly seen from the exemplary user interface 600, the components of the project object PLC_1 of the project PRO10 can be compared visually with the components of the exemplary corresponding engineering object PLC_1. From the user interface 600, it can observed that BLOCK_3 component is available in the project object PLC_1 but not in the corresponding engineering object PLC_1. Similarly, BLOCK_4 component is available in the corresponding engineering object PLC_1 but not in the project object PLC_1. From the exemplary user interface 600 of FIG 6 it is clear that a project object can be compared visually with a corresponding versioned object available in the repository 104.

In addition to this, a user can select the BLOCK_4 component from the exemplary corresponding engineering object PLC_1 and merge the BLOCK_4 component to the exemplary project object PLC_1 of the project PRO10 by using the drag-and-drop functionality. Also, the comparison architecture 500 shown in FIG 5 facilitates the user to delete the BLOCK_3 component from the project object PLC_1. In an embodiment of the present invention, the users can drag-and-drop the BLOCK_3 component from the project object PLC_1 to the corresponding engineering object PLC_1. The merging of the components of a corresponding versioned object available in the repository 104 in a project object is described herewith the drag-and-drop functionality. In another embodiment of the present invention, the components can be merged by using technique known to a persona ordinarily skied in the art.

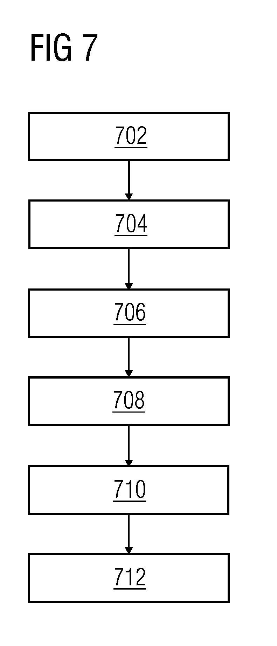

Now referring to FIG 7 a flow chart for a method for comparing and merging engineering objects is illustrated in accordance with an embodiment of the present invention.

At step 702, a user selects a project object from the comparison user interface 502 as shown in FIG 5 and the comparison user interface 502 communicates the selection to the selection module 504. The preferred and alternate methods for selecting the project object are explained in preceding figures.

At step 704, the fetching module 506 shown in FIG 5 fetches a versioned object corresponding to the selected project object from the object repository 104 of FIG 1. The preferred and alternate methods for fetching the corresponding versioned object are explained in preceding figures.

At step 706, a policy corresponding to "type" of the selected project object is read from XML code, as illustrated in FIG 4 and loaded in the memory module 508 of FIG 5. The preferred and alternate methods for loading the policy in the memory module 508 are explained in preceding figures.

At step 708, the corresponding versioned object is imported in the temporary project module 510 from the fetching module 506 through the policy loaded in the memory module 508, as illustrated in FIG 5, to create a corresponding engineering object in a temporary project of the temporary project module 510. The preferred and alternate methods for importing the corresponding versioned object and creating the corresponding engineering object are explained in preceding figures.

At step 710, the corresponding engineering object of the temporary project is visually compared with the project object through object data structures by using the comparison user interface 502 as described in FIG 5 and FIG 6. The preferred and alternate methods for comparing the corresponding engineering object with the project object are explained in preceding figures.

At step 712, a user can optionally merge components of the corresponding engineering object created from the versioned object available in the repository 104 in the project object, as described with the exemplary user interface 600 of FIG 6.

It is evident from the foregoing description of the present invention that the invention provides a method and an architecture for comparing and merging a project object with a versioned engineering object stored using dynamic versioning strategy in the version management repository.

The present invention also discloses a method and an architecture for comparing and merging of two or more versions of an engineering object stored using dynamic versioning strategy in the version management repository.

In addition to this, the invention also provides a method and an architecture for comparing and merging an engineering object with a different engineering object of similar "type" stored in the version management repository.

The method and architecture disclosed in the present invention also facilitates a user to graphically or visually compare the project objects with the versioned objects stored in repository regardless the formats of the project objects and the versioned objects.

Also, the present invention provides a less complex and hassle-free method and architecture for comparing and merging the project objects with the stored versioned objects.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method for comparing at least one project object with at least one versioned object in a software management system (100), the method comprising:
- fetching the at least one versioned object from a plurality of versioned objects;
- loading at least one policy in at least one memory module (508) wherein the at least one policy is in correspondence with a type of the at least one project object;
- creating at least one engineering object from the at least one versioned object and the at least one policy; and
- displaying the at least one project object and the at least one engineering object on one or more comparison user interfaces (502).

2. The method according to claim 1 further comprises a step of selecting the at least one project object from a plurality of project objects before fetching the at least one versioned object.

3. The method according to claim 2 wherein the at least one versioned object is in correspondence with the at least one project object.

4. The method according to claim 1 further comprises a step of importing the at least one versioned object through the at least one policy in at least one temporary project module (510) before creating the at least one engineering object.

5. The method according to claim 1 wherein the at least one engineering object is a part of at least one temporary project.

6. The method according to claim 5 wherein the at least one temporary project is created in at least one temporary project module (510).

7. The method according to claim 1 further comprises a step of merging one or more components of the at least one project object and one or more versioned components of the at least one engineering object after the step of displaying the at least one project object and the at least one engineering object on the one or more comparison user interfaces (502).

8. The method according to claim 7 wherein the merging of the one or more components further comprises dragging-and-dropping the one or more versioned components of the at least one engineering object in the at least one project object.

9. The method according to claim 7 wherein the merging the one or more components further comprises dragging-and-dropping the one or more components of the at least one project object in the at least one engineering object.

10. A comparison architecture (500) for comparing at least one project object with at least one versioned object in a software management system (100), the comparison architecture (500) comprises:
- at least one fetching module (506) for fetching the at least one versioned object from a plurality of versioned objects;
- at least one memory module (508) for loading at least one policy;
- at least one temporary project module (510) for creating at least one engineering object from the at least one versioned object and the at least one policy; and
- one or more comparison user interfaces (502) for displaying the at least one project object and the at least one engineering object.

11. The comparison architecture (500) according to claim 10 further comprises at least one selection module (504) for selecting the at least one project object from a plurality of project objects before fetching the at least one versioned object.

12. The comparison architecture (500) according to claim 10 is a part of a software management system (100).

13. The comparison architecture (500) according to claim 12 wherein the at least one fetching module (506) fetches the at least one versioned object from a plurality of versioned objects stored in at least one object repository (104) of the software management system (100).

14. The comparison architecture (500) according to claim 12 wherein the at least one memory module (508) loads the at least one policy from at least one policy master tool (112) of the software management system (100).
